# EUROPEAN PATENT APPLICATION

(11) **EP 2 747 405 A2**
(43) Date of publication of application: **25.06.2014**
(21) Application number: 13197722.5
(22) Date of filing: 17.12.2013
(51) Int. Cl.: H04N 1/04

(54) **Image forming apparatus and image forming program**

(30) Priority: 21.12.2012 JP 2012280288
(71) Applicant: Kyocera Document Solutions Inc., Osaka-shi, Osaka 540-8585 (JP)
(72) Inventor: Kimura, Koichi, Osaka-shi, Osaka 540-8585 (JP)
(74) Representative: BRP Renaud & Partner

(57) **Abstract**

An image forming apparatus includes an image reading section, an image processing section, an image forming control section, and an image forming section. The image reading section is configured to read an original document and output a band data set for one band. The image processing section is configured to compress the band data set at a first compression rate to generate a first compressed band data set, expand the first compressed band data set, and subject the expanded band data set to image processing. Thereafter, the image processing section compresses the band data set subjected to the image processing at a second compression rate to generate a second compressed band data set. When the number of second compressed band data sets reaches a printing start value, the image forming control section allows the image forming section to start forming an image based on the second compressed band data sets.

## Description

### INCORPORATION BY REFERENCE

This application claims priority to Japanese Patent Application No.2012-280288 filed on December 21, 2012, the entire contents of which are incorporated by reference herein.

### BACKGROUND

The present disclosure relates to an image forming apparatus and an image forming program and particularly relates to a technique for speeding up reading of original documents and printing.

The time taken for an image forming apparatus to read an original document and the time taken for it to print have been shortened. For example, a technique is known in which only non-blank (non-white) data (effective data) is read from a RAM storing print data and, in the presence of blank data, the blank data is not read but band data is generated with the blank data added thereto, thereby reducing useless memory access to increase the processing speed of the apparatus.

There is also known a technique in which dedicated hardware is used to realize processing for adding blank data sets before and after a line data set in an effective reading range read by a facsimile device or the like to generate a data set having a predetermined number of pixels, thereby shortening and speeding up the time taken for data processing.

### SUMMARY

A technique improved over the aforementioned techniques is proposed as one aspect of the present disclosure.

An image forming apparatus according to the one aspect of the present disclosure includes: a receiving section; an image reading section, a band counting section; an image reading control section; an image processing section; an image forming section; and an image forming control section.

The receiving section is configured to receive a setting whether or not the number of original documents is plural.

The image reading section is configured to read the original document and sequentially output image data sets as band data sets band by band, the band being a region of a predetermined width along a sub-scanning direction perpendicular to a main scanning direction equal to a direction of reading of the original document.

The band counting section is configured to count the number of band data sets for one page of the original document.

The image reading control section is configured to instruct the image reading section to start reading the original document.

The image processing section is configured to compress the band data set at a predetermined first compression rate to generate a first compressed band data set, expand the first compressed band data set to acquire a band data set, subject the acquired band data set to image processing, and then compress the band data set subjected to the image processing at a second compression rate to generate a second compressed band data set.

The image forming section is configured to form an image on a sheet.

The image forming control section is configured to, when the number of second compressed band data sets generated by the image processing section reaches a predetermined number, allow the image forming section to form an image based on the second compressed band data sets.

Furthermore, if the number of band data sets counted by the band counting section is smaller than a predetermined setting number, the image processing section, after generating the second compressed band data sets for one page of the original document, generates one or more blank data sets by a difference between the number of band data sets and the setting number, compresses the one or more blank data sets at the second compression rate to generate one or more compressed blank data sets, and outputs the second compressed band data sets with the one or more compressed blank data sets added thereto.

When the receiving section receives a setting that the number of original documents is plural, the image reading section reads the second and later of the original documents without any instruction of the image reading control section to start reading the original documents.

An image forming program according to another aspect of the present disclosure includes: a receiving step; an image reading step; a band counting step; an image reading control step; an image processing step; an image forming control step; and a blank data generating step.

The receiving step is the step of receiving a setting whether or not the number of original documents is plural.

The image reading control step is the step of instructing to start reading the original document.

The image reading step is the step of allowing an image reading section to read the original document and sequentially output image data sets as band data sets band by band, the band being a region of a predetermined width along a sub-scanning direction perpendicular to a main scanning direction equal to a direction of reading of the original document.

The band counting step is the step of counting the number of band data sets for one page of the original document.

The image processing step is the step of compressing the band data set at a predetermined first compression rate to generate a first compressed band data set, expanding the first compressed band data set to acquire a band data set, subjecting the acquired band data set to image processing, and then compressing the band data set subjected to the image processing at a second compression rate to generate a second compressed band data set.

The image forming control step is the step of, when the number of second compressed band data sets generated in the image processing step reaches a predetermined number, allowing an image forming section to form an image based on the second compressed band data sets.

The blank data generating step is the step of, if the number of band data sets counted in the band counting step is smaller than a predetermined setting number, generating one or more blank data sets by a difference between the number of band data sets and the setting number, compressing the one or more blank data sets at the second compression rate to generate one or more compressed blank data sets, and outputting the second compressed band data sets for one page of the original document generated in the image processing step, together with the one or more compressed blank data sets added to the second compressed band data sets.

Furthermore, in the image reading step, the image forming program operates the computer so that, when in the receiving step a setting is received that the number of original documents is plural, in the image reading step the second and later of the original documents are read without any instruction in the image reading control step to start reading the original documents.

### BRIEF DESCRIPTION OF THE DRAWINGS

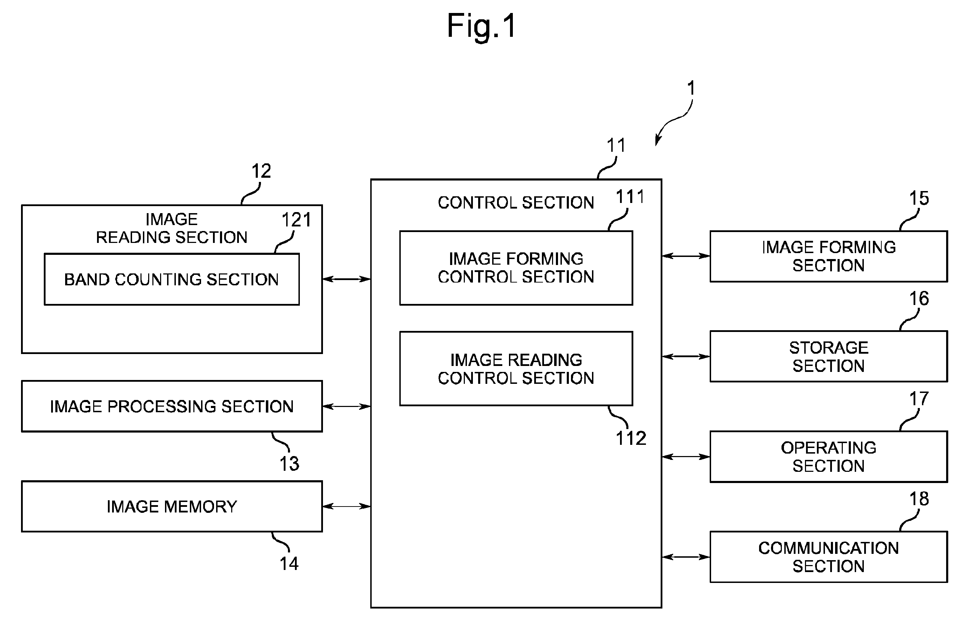

FIG. 1 is a block diagram showing an electrical configuration of an image forming apparatus according to one embodiment of the present disclosure.

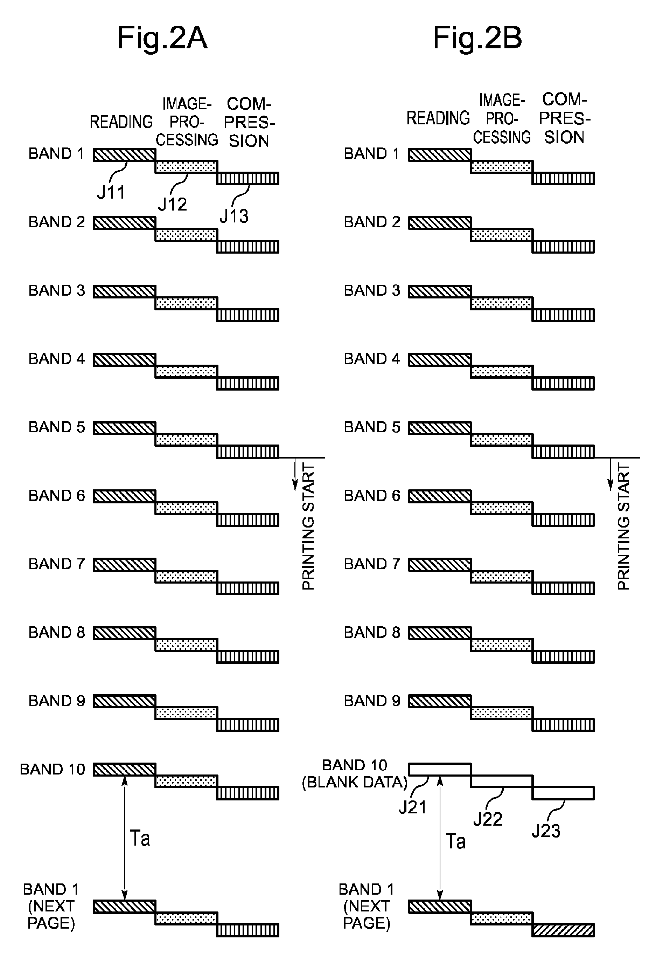

FIG. 2A is a diagram illustrating a print priority mode in Related Art Example 1 and showing processing of the print priority mode when the number of bands for one page is ten; FIG. 2B is a diagram illustrating the print priority mode in Related Art Example 1 and showing processing of the print priority mode when the number of bands for one page is nine.

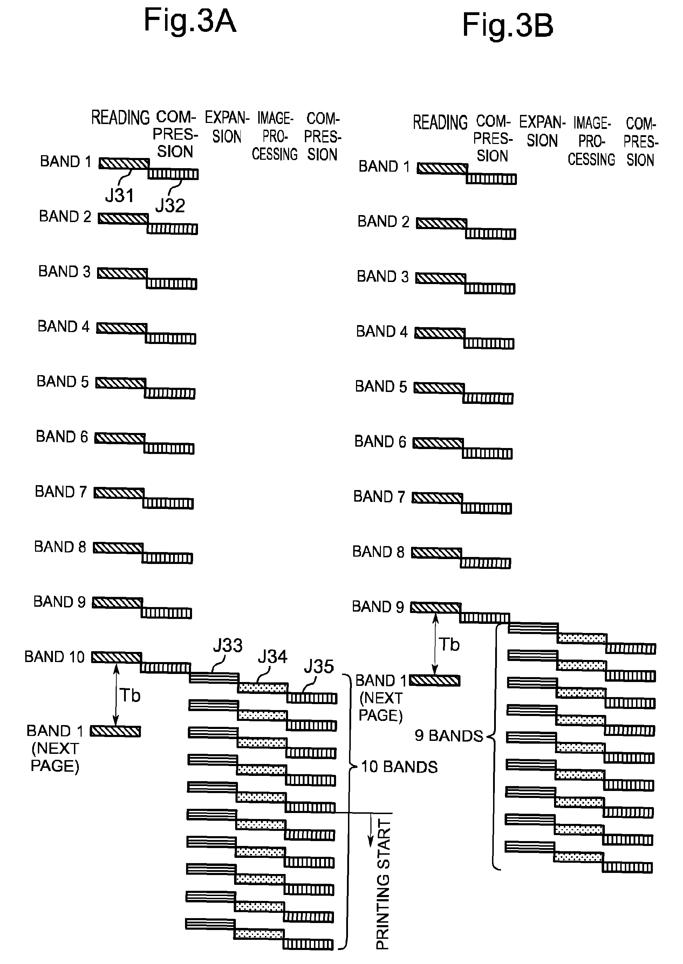

FIG. 3A is a diagram illustrating a read priority mode in Related Art Example 2 and showing processing of the read priority mode when the number of bands for one page is ten; FIG. 3B is a diagram illustrating the read priority mode in Related Art Example 2 and showing processing of the read priority mode when the number of bands for one page is nine.

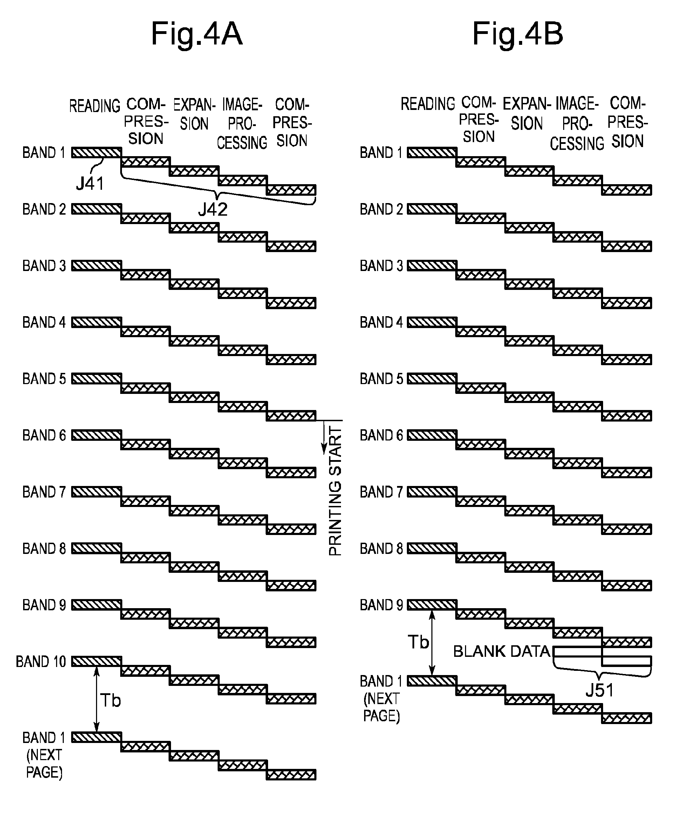

FIG. 4A is a diagram illustrating a read/print priority mode according to the one embodiment of the present disclosure and showing processing of the read/print priority mode when the number of bands for one page is ten; FIG. 4B is a diagram illustrating the read/print priority mode according to the one embodiment of the present disclosure and showing processing of the read/print priority mode when the number of bands for one page is nine.

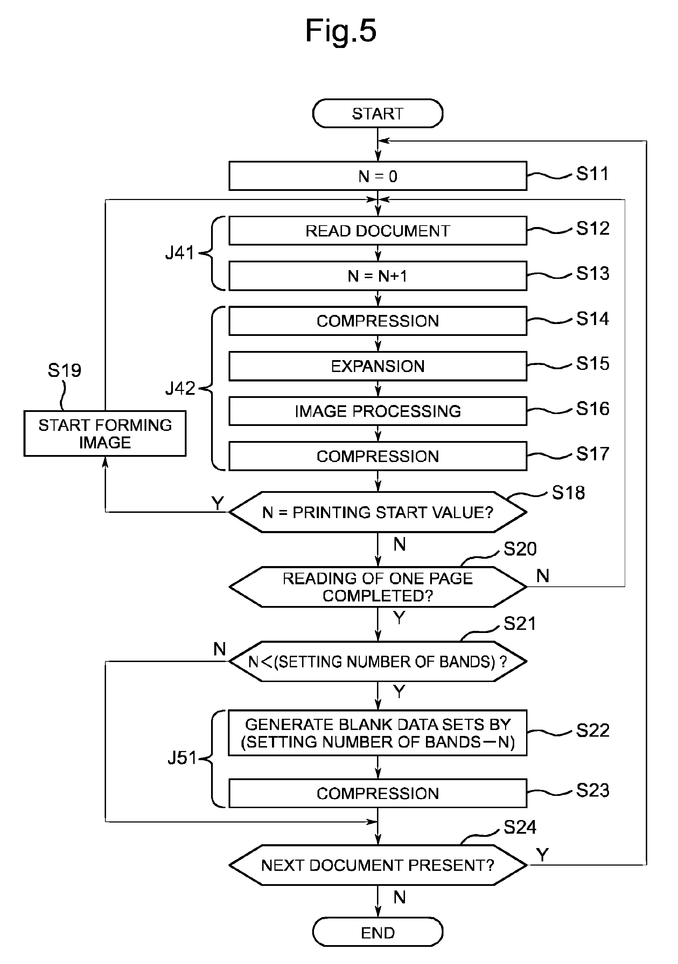

FIG. 5 is a flowchart showing a processing flow of the read/print priority mode according to the one embodiment of the present disclosure.

### DETAILED DESCRIPTION

Hereinafter, a description will be given of an image forming apparatus according to one embodiment of the present disclosure with reference to the drawings. FIG. 1 is a block diagram showing an electrical configuration of an image forming apparatus 1 of this embodiment. The image forming apparatus 1 includes a control section 11, an image reading section 12, an image processing section 13, an image memory 14, an image forming section 15, a storage section 16, an operating section 17, and a communication section 18.

The image reading section 12 is configured to read an original document and output image data. The image reading section 12 reads the original document line by line in a main scanning direction. Then, the image reading section 12 outputs, with a predetermined number of lines of image data as one band, image data sets (band data sets) band by band. In other words, a region of the original document having a predetermined width in a sub-scanning direction is a region equivalent to one band. The image reading section 12 includes a band counting section 121. The band counting section 121 is configured to count the number of band data sets (the number of bands) for one page of the original document.

Furthermore, the image reading section 12 functions also as a receiving section configured to receive a setting whether or not the number of original documents is plural. The setting is done through the operating section 17 by a user. Although described in detail later, when receiving a setting that the number of original documents is plural, the image reading section 12 reads the second and later of the original documents without any instruction of an image reading control section 112 to start reading the original documents.

The image processing section 13 is configured to compress the band data set, which has been output from the image reading section 12, at a first compression rate to generate a first compressed band data set and expand the first compressed band data set to acquire a band data set. The image processing section 13 is further configured to subject the expanded band data set to image processing (such as quality/color adjustment, enlargement/reduction or density adjustment) and then compress the band data set subjected to the image processing at a second compression rate to generate a second compressed band data set.

Furthermore, if the number of bands for one page counted by the band counting section 121 is smaller than a predetermined setting number, the image processing section 13, after generating the second compressed band data sets for one page, generates one or more blank data sets by a difference between the number of bands and the setting number, and compresses the one or more blank data sets at the second compression rate to generate one or more compressed blank data sets. Then, the image processing section 13 outputs the second compressed band data sets with the one or more compressed blank data sets added thereto. The processing flow of the image processing section 13 will be described in detail later.

The image memory 14 is configured to accumulate and store the second compressed band data sets output by the image processing section 13.

The image forming section 15 is configured to form an image, based on the second compressed band data sets stored in the image memory 14, on a sheet serving as a recording medium. The storage section 16 stores various programs, data, and so on necessary for the image forming apparatus 1 to operate.

The operating section 17 includes a display panel, such as an LCD (liquid crystal display), which is equipped with operating keys for receiving operator's commands for various types of operations and processing executable by the image forming apparatus 1 and has a touch panel function.

The communication section 18 is an interface circuit configured to communicate with various electronic devices through a LAN (local area network) or a WAN (wide area network) connected to the image forming apparatus 1 and can download new firmware transmitted from an external server or the like.

The control section 11 is composed of a CPU (central processing unit) or the like and configured to read various programs stored in the storage section 16, perform processing based on the read programs, and take overall control of the image forming apparatus 1 by performing output of command signals to each functional section, data transfer thereto, and so on. The control section 11 includes an image forming control section 111 and an image reading control section 112. The image forming control section 111 is configured to instruct the image forming section 15 to start forming an image. The image reading control section 112 is configured to instruct the image reading section 12 to start reading the original document.

Next, a description will be given of a print priority mode providing a shortened print time according to Related Art Example 1. FIGS. 2A and 2B are diagrams illustrating the print priority mode.

FIG. 2A is a diagram showing processing of the print priority mode when the number of bands for one page is ten. In the print priority mode, first, an image reading section reads an image of an original document to acquire a band data set for one band (J11 in FIG. 2A) and the band data set is subjected to image processing (J12). Then, the image of the band data set subjected to the image processing is compressed (J13). In doing so, the image processing and image compression are generally performed by different components (modules). This processing cycle of reading (J11), image processing (J12), and compression (J13) is repeated for ten bands (one page).

The compressed band data sets are accumulated and stored in an image memory or the like. Then, when the band data sets are collected by a predetermined setting number of bands (for example, five), image formation is performed based on the accumulated band data sets. Therefore, in the print priority mode, printing is started even in the middle of reading an original document, so that the printing can be finished early.

In the print priority mode, however, a request to the image reading section for starting reading the next original document is made after the end of reading of one page and, therefore, the time Ta from the end of reading of the first page to the start of reading of the second page is long. In other words, in the print priority mode, printing can be finished early but the read time is not shortened.

FIG. 2B is a diagram showing processing of the print priority mode when the number of bands for one page is nine. In the case of an original document having a short length in the sub-scanning direction, for example, nine bands for one page as shown in FIG. 2B, the image reading section generates a blank data set as a tenth band data set (J21) and the blank band data set is subjected to image processing (J22) and then compressed (J23). In other words, in the print priority mode, band data sets for ten bands are generated even for a short original document and, also for this reason, the read time is not shortened.

Next, a description will be given of a read priority mode according to Related Art Example 2. FIGS. 3A and 3B are diagrams illustrating the read priority mode.

FIG. 3A is a diagram showing processing of the read priority mode when the number of bands for one page is ten. In the read priority mode, an image reading section outputs a read band data set for one band (J31) and an image processing section compresses the band data set (J32). The compressed band data set is accumulated and stored in an image memory or the like. This processing cycle of reading (J31) and compression (J32) is repeated for ten bands (one page).

Then, when the image reading and compression for ten bands are completed, the compressed band data sets for ten bands stored in the image memory are subjected to expansion (J33), image processing (J34), and compression (J35). Furthermore, when the number of band data sets subjected to these processing stages reaches a setting number (= 5 in this example), image formation is started.

Generally, in such a read priority mode, a setting that the number of original documents to be read is large is previously made and a cycle of reading (J31) and compression (J32) is successively repeated for a plurality of band data sets. Then, when cycles of image reading and compression for ten bands are completed, the band data sets for ten bands are started to be collectively subjected to expansion (J33), image processing (J34), and compression (J35), so that a band data set to be read next is ready to be read (J31) and compressed (J32). The image reading section can start reading the second page without any request to read the next original document. Thus, in the read priority mode, the time Tb from the end of reading of the first page to the start of reading of the second page is shortened. Hence, in the case where the number of original documents is plural, the time taken to read all these original documents can be shortened.

The read priority mode is suitable mainly for the case without printing, such as the case of use of a network scanner, that is, the case where only reading is performed. FIG. 3B is a diagram showing processing of the read priority mode when the number of bands for one page is nine. Even in the case of an original document having a short length in the sub-scanning direction, for example, nine bands for one page as shown in FIG. 3B, there is no need, if printing is not performed, to supplement a deficiency with a blank data set, unlike the print priority mode. Therefore, in the read priority mode, the time taken to read all of original documents can be more shortened as the length of each original document is shorter.

However, when printing is performed in the read priority mode, printing is postponed until reading of ten bands is completed and then the expansion, image processing, and compression of band data sets for five bands are completed. Therefore, it takes long time before the end of printing.

Through intensive studies, the inventor has devised an image forming apparatus having an operation mode (read/print priority mode) capable of solving the above problems of Related Art Examples 1 and 2 and discloses it herein. FIGS. 4A and 4B are diagrams illustrating a read/print priority mode according to the one embodiment of the present disclosure, wherein FIG. 4A shows processing of the read/print priority mode when the number of bands for one page is ten; and FIG. 4B shows processing of the read/print priority mode when the number of bands for one page is nine. FIG. 5 is a flowchart showing a processing flow of the read/print priority mode according to the one embodiment of the present disclosure.

First, the band counting section 121 sets a variable n in an internal memory (not shown) and inserts zero into the variable n (S11). Note that the variable n is an integer of zero or more and represents the number of band data sets read by the image reading section 12.

Then, when the image reading control section 112 instructs the image reading section 12 to start reading an original document, the image reading section 12 reads the original document and outputs a band data set for one band (S12) and the band counting section 121 adds 1 to the variable n (S13). These processing stages correspond to J41 in FIG. 4A.

Next, the image processing section 13 compresses the band data set, which has been output from the image reading section 12, at a first compression rate to generate a first compressed band data set (S14), expands the first compressed band data set (S15), and subjects the expanded band data set to image processing (S16). Thereafter, the image processing section 13 compresses the band data set subjected to the image processing at a second compression rate to generate a second compressed band data set (S17). The image memory 14 accumulates and stores the second compressed band data set.

The image processing section 13 performs the processing stages from S 14 to S 17 (corresponding to J42 in FIG. 4A) by software processing. Therefore, the image processing section 13 stores, in an internal non-volatile memory (not shown), a program for subjecting the band data set to compression, expansion, and image processing. The above processing stages from S 14 to S 17 are implemented by executing this program. In order to rapidly perform software processing for compression, expansion, and image processing, the image processing section 13 preferably has a configuration capable of implementing double buffering or like techniques.

Next, the image forming control section 111 determines whether or not the value of the variable n agrees with a printing start value (S 18). If the value of the variable n reaches the printing start value (YES in S 18), the image forming control section 111 allows the image forming section 15 to start forming an image based on the second compressed band data sets stored in the image memory 14 (S 19). Thereafter, the processing returns to S12.

The printing start value is a value indicating the timing to start printing and a predetermined value. For example, at a printing start value of 5, the image forming control section 111 instructs the image forming section 15 to start forming an image when the image processing section 13 generates five second compressed band data sets. Thus, image formation is started even in the middle of reading an original document, so that the printing can be finished early.

Then, if the image reading section 12 has not yet completed the reading of one page of an original document (NO in S20), the image reading section 12 and the image processing section 13 return the processing to S12. When the reading of one page of the original document is completed (YES in S20), the image forming control section 111 compares the variable n with the setting number of bands (S21).

If the variable n is smaller than the setting number of bands, the image forming control section 111 outputs a difference between the variable n and the setting number of bands to the image processing section 13 and the image processing section 13 generates one or more blank data sets by the difference (S22). Then, the image processing section 13 compresses the one or more blank data sets at a second compression rate to generate one or more compressed blank data sets and outputs the second compressed band data sets with the one or more compressed blank data sets added thereto (S23). These processing stages correspond to J51 in FIG. 4B. The term setting number of bands used herein refers to a predetermined number of bands for one page and the description of this embodiment is given with the setting number of bands as ten.

If the original document has a short length in the sub-scanning direction, the image reading section 12 terminates the reading of one page in a number of bands smaller than the setting number of bands. However, the image processing section 13 needs to output second compressed band data sets by the setting number of bands. Therefore, if the number of band data sets read by the image reading section 12 is smaller than the setting number of bands (in other words, the variable n is smaller than the setting number of bands), the image processing section 13, as shown in FIG. 4B, generates one or more blank data sets by a difference between the setting number of bands and the variable n, compresses the blank data sets, and outputs band data sets for the setting number of bands with the compressed blank data sets added to the second compressed band data sets.

Then, if the next original document is present (YES in S24), the image reading section 12 and the image processing section 13 returns the processing to S11. If the next original document is not present (NO in S24), the processing ends.

In performing the read/print priority mode, the user previously provides, through the operating section 17, a setting that the number of original documents to be read is plural. If the image reading section 12 receives this setting, it in due course starts reading the next-page original document without any request from the image reading control section 112 to start reading the original document. Thus, as shown in FIGS. 4A and 4B, the time Tb from the end of reading of the first page to the start of reading of the second page can be shortened. Hence, in the case where the number of original documents is plural, the time taken to read original documents can be shortened.

As described previously, in the image forming apparatus 1 according to the one embodiment of the present disclosure, the image reading section 12 serves as the receiving section to receive a setting whether or not the number of original documents is plural. Furthermore, the image reading section 12 is configured to read the original document and sequentially output image data sets as band data sets band by band, the band being a region of a predetermined width along a sub-scanning direction perpendicular to a main scanning direction equal to a direction of reading of the original document.

The image processing section 13 is configured to compress the band data set at a predetermined first compression rate to generate a first compressed band data set, expand the first compressed band data set to acquire a band data set, subject the acquired band data set to image processing, and then compress the band data set subjected to the image processing at a second compression rate to generate a second compressed band data set.

The image forming control section 111 is configured to, when the number of second compressed band data sets generated by the image processing section 13 reaches a predetermined number, allow the image forming section 15 to form an image based on the second compressed band data sets.

Furthermore, if the number of band data sets counted by the band counting section 121 is smaller than a predetermined setting number, the image processing section 13, after generating the second compressed band data sets for one page of the original document, generates one or more blank data sets by a difference between the number of band data sets and the setting number, compresses the one or more blank data sets at the second compression rate to generate one or more compressed blank data sets, and outputs the second compressed band data sets with the one or more compressed blank data sets added thereto.

When the receiving section receives a setting that the number of original documents is plural, the image reading section 12 reads the second and later of the original documents without any instruction of the image reading control section 112 to start reading the original documents.

With the above configuration, even in the middle of reading an original document, the image forming control section 111 can instruct the image forming section to start forming an image at the time when the second compressed band data sets have been generated by the number indicated by the predetermined printing start value. Thus, the image forming apparatus 1 starts image formation even in the middle of reading the original document, so that the printing can be finished early.

In addition, if the user previously provides a setting that the number of original documents to be read is plural, the image reading section 12 starts reading the second or later original documents without any instruction of the image reading control section 112 to read the original documents. Thus, the image forming apparatus 1 can shorten the time from the end of reading of the previous-page original document to the start of the next-page original document and thereby can shorten the time taken to read a plurality of original documents.

Generally, there are known: (1) a technique in which only non-blank data (effective data) is read from a RAM storing print data and, in the presence of blank data, the blank data is not read but band data is generated with the black data added thereto, thereby reducing useless memory access to increase the processing speed of the apparatus; and (2) a technique in which dedicated hardware is used to realize processing for adding blank data sets before and after a line data set in an effective reading range read by a facsimile device or the like to generate a data set having a predetermined number of pixels, thereby shortening and speeding up the time taken for data processing. However, the technique (1) is intended to speed up printing and not directed at the reading of original documents. Contrariwise, the technique (2) is intended to speed up the reading of original documents by reducing the processing load of the apparatus and not directed at printing.

With the image forming apparatus according to the one embodiment of the present disclosure, both the reading of original documents and printing in the image forming apparatus can be speeded up.

The present disclosure is not limited to the configurations of the above embodiment and can include various modifications. For example, although the description of the above embodiment is given taking a multifunction peripheral as an example of the image forming apparatus according to the present disclosure, the example is merely illustrative and the image forming apparatus may be any image forming apparatus other than the multifunction peripheral, such as a copier, a scanner or a facsimile machine.

The program described in the above embodiment may be stored on a computer-readable non-transitory storage medium, such as a hard disk, an optical disk or a semiconductor memory.

Various modifications and alterations of this disclosure will be apparent to those skilled in the art without departing from the scope and spirit of this disclosure, and it should be understood that this disclosure is not limited to the illustrative embodiments set forth herein.

## Claims

1. An image forming apparatus comprising:
a receiving section configured to receive a setting whether or not the number of original documents is plural;
an image reading section configured to read the original document and sequentially output image data sets as band data sets band by band, the band being a region of a predetermined width along a sub-scanning direction perpendicular to a main scanning direction equal to a direction of reading of the original document;
a band counting section configured to count the number of band data sets for one page of the original document;
an image reading control section configured to instruct the image reading section to start reading the original document;
an image processing section configured to compress the band data set at a predetermined first compression rate to generate a first compressed band data set, expand the first compressed band data set to acquire a band data set, subject the acquired band data set to image processing, and then compress the band data set subjected to the image processing at a second compression rate to generate a second compressed band data set;
an image forming section configured to form an image on a sheet; and
an image forming control section configured to, when the number of second compressed band data sets generated by the image processing section reaches a predetermined number, allow the image forming section to form an image based on the second compressed band data sets, wherein
if the number of band data sets counted by the band counting section is smaller than a predetermined setting number, the image processing section, after generating the second compressed band data sets for one page of the original document, generates one or more blank data sets by a difference between the number of band data sets and the setting number, compresses the one or more blank data sets at the second compression rate to generate one or more compressed blank data sets, and outputs the second compressed band data sets with the one or more compressed blank data sets added thereto, and
when the receiving section receives a setting that the number of original documents is plural, the image reading section reads the second and later of the original documents without any instruction of the image reading control section to start reading the original documents.

2. The image forming apparatus according to claim 1, wherein the image processing section performs, using double buffering, processing for compressing the band data set at a first compression rate, expansion processing for expanding the first compressed band data set, processing for subjecting the band data set obtained by the expansion processing to image processing, and processing for compressing the band data set subjected to the image processing at a second compression rate.

3. An image forming program comprising:
a receiving step of receiving a setting whether or not the number of original documents is plural;
an image reading control step of instructing to start reading the original document;
an image reading step of allowing an image reading section to read the original document and sequentially output image data sets as band data sets band by band, the band being a region of a predetermined width along a sub-scanning direction perpendicular to a main scanning direction equal to a direction of reading of the original document;
a band counting step of counting the number of band data sets for one page of the original document;
an image processing step of compressing the band data set at a predetermined first compression rate to generate a first compressed band data set, expanding the first compressed band data set to acquire a band data set, subjecting the acquired band data set to image processing, and then compressing the band data set subjected to the image processing at a second compression rate to generate a second compressed band data set;
an image forming control step of, when the number of second compressed band data sets generated in the image processing step reaches a predetermined number, allowing an image forming section to form an image based on the second compressed band data sets; and
a blank data generating step of, if the number of band data sets counted in the band counting step is smaller than a predetermined setting number, generating one or more blank data sets by a difference between the number of band data sets and the setting number, compressing the one or more blank data sets at the second compression rate to generate one or more compressed blank data sets, and outputting the second compressed band data sets for one page of the original document generated in the image processing step, together with the one or more compressed blank data sets added to the second compressed band data sets,
wherein in the image reading step the image forming program operates the computer so that, when in the receiving step a setting is received that the number of original documents is plural, in the image reading step the second and later of the original documents are read without any instruction in the image reading control step to start reading the original documents.
